(19) Europäisches Patentamt
European Patent Office
Office européen des brevets

(11) **EP 2 626 266 A1**

(12) **EUROPEAN PATENT APPLICATION**
published in accordance with Art. 153(4) EPC

(43) Date of publication:
**14.08.2013 Bulletin 2013/33**

(51) Int Cl.:
*B60W 30/02* (2012.01)    *B60T 8/173* (2006.01)
*B60T 8/1755* (2006.01)   *B60W 10/18* (2012.01)

(21) Application number: **10858146.3**

(22) Date of filing: **08.10.2010**

(86) International application number:
**PCT/JP2010/067783**

(87) International publication number:
**WO 2012/046340 (12.04.2012 Gazette 2012/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **TOYOTA JIDOSHA KABUSHIKI
KAISHA
Aichi-ken, 471-8571 (JP)**

(72) Inventor: **YOKOTA, Takahiro
Toyota-shi
Aichi 471-8571 (JP)**

(74) Representative: **Winter, Brandl, Fürniss, Hübner,
Röss, Kaiser, Polte - Partnerschaft
Alois-Steinecker-Strasse 22
85354 Freising (DE)**

(54) **VEHICLE MOTION CONTROL SYSTEM**

(57)    A vehicle motion control system 1 includes a vehicle state amount obtaining means configured to obtain a reference yaw rate and an actual yaw rate of a vehicle 10, a vehicle state estimating means configured to determine OS/US determinations based on the reference yaw rate and the actual yaw rate, and a vehicle motion control means configured to execute a vehicle motion control based on a result of the OS/US determinations. In the vehicle motion control system 1, a high-pass filter unit 312 of a control unit 3 executes a high-pass filter process for removing a component equal to or less than a predetermined cut-off frequency from the reference yaw rate and the actual yaw rate. Then, an OS/US determining unit 313 executes the OS/US determinations based on a deviation between the reference yaw rate after the high-pass filter process and the actual yaw rate after the high-pass filter process.

FIG.2

START

OBTAIN OUTPUT VALUES OF VARIOUS SENSORS — ST1

CALCULATE REFERENCE YAW RATE — ST2

HPF PROCESS OF REFERENCE YAW RATE — ST3

HPF PROCESS OF ACTUAL YAW RATE — ST4

OS/US DETERMINATIONS (WITH HPF PROCESS) — ST5 → NO

YES

OS/US SUPPRESSION CONTROL — ST6

END

EP 2 626 266 A1

**Description**

Field

The present invention relates to a vehicle motion control system, and more particularly, to a vehicle motion control system capable of accurately executing OS/US determinations by reducing an influence of a sensor error. Background

In an ordinary vehicle motion control system, a reference yaw rate and an actual yaw rate are obtained based on output values of various sensors and a determination of an under-steered state and an over-steered state of a vehicle (OS/US determinations) is executed based on a deviation of the reference yaw rate and the actual yaw rate.

A technology described in Patent Literature 1 is known as a conventional vehicle motion control system. In the conventional vehicle motion control system (vehicle motion control device), it is intended to remove an influence of a sensor error by executing OS/US determinations based on multiplying a deviation between a reference yaw rate and an actual yaw rate by a feedback gain having predetermined frequency characteristics.

Citation List

Patent Literature

Patent Literature 1: Japanese Patent Application Laid-open No. H08-048256

Summary

Technical Problem

Here, an inherent sensor error (in particular, a zero point error included in a low frequency component) is included in the output values of the various sensors. The sensor error is a known value which can be obtained from specifications of the various sensors. It is not preferable that the sensor error is large because OS/US determinations are delayed. Further, in the technology described in Patent Literature 1, since the yaw rate deviation is multiplied by the feedback gain having the predetermined frequency characteristics, there is a possibility that the yaw rate deviation having been subjected to a frequency process cannot reflect an influence of OS/US and thus an accuracy of a determination is influenced.

Thus, an object of the present invention, which was made in view of the circumstances described above, is to provide a vehicle motion control system capable of accurately executing OS/US determinations by reducing an influence of a sensor error.

Solution to Problem

In order to achieve the above mentioned object, a vehicle motion control system according to the present invention includes a vehicle state amount obtaining means configured to obtain a reference yaw rate and an actual yaw rate of a vehicle; a vehicle state estimating means configured to determine an over-steered state or an under-steered state of the vehicle (hereinafter, referred to as OS/US determinations) based on the reference yaw rate and the actual yaw rate; and a vehicle motion control means configured to execute a vehicle motion control based on a result of the OS/US determinations, wherein the vehicle state estimating means executes a high-pass filter process for removing a component equal to or less than a predetermined cut-off frequency from the reference yaw rate and the actual yaw rate, as well as executes the OS/US determinations based on a deviation between the reference yaw rate after the high-pass filter process and the actual yaw rate after the high-pass filter process.

Further, in the vehicle motion control system, it is preferable that the vehicle state estimating means changes the cut-off frequency according to the number of times of steering of the vehicle.

Further, in the vehicle motion control system, it is preferable that the vehicle state estimating means changes the cut-off frequency according to front-back acceleration of the vehicle.

Further, in the vehicle motion control system, it is preferable that when the vehicle state amount obtaining means calculates the reference yaw rate based on output values of a predetermined sensor, the vehicle state estimating means executes the OS/US determinations by a comparison of a deviation between the reference yaw rate after the high-pass filter process and the actual yaw rate after the high-pass filter process with a predetermined threshold value k having an absolute value larger than 0 as well as smaller than a sensor error of the sensor.

Further, in the vehicle motion control system, it is preferable that when the OS/US determinations based on the deviation between the reference yaw rate after the high-pass filter process and the actual yaw rate after the high-pass filter process have been established, the vehicle state estimating means sets a threshold value k' having an absolute value larger than 0 and smaller than the sensor error, as well as executes the OS/US determinations by a comparison of a deviation between the reference yaw rate without the high-pass filter process and the actual yaw rate without the high-pass filter process with a threshold value k'.

Further, in the vehicle motion control system, it is preferable that when at least one of the OS/US determinations based on a deviation between the reference yaw rate after the high-pass filter process and the actual yaw rate after the high-pass filter process, and the OS/US determinations based on a deviation between the reference yaw rate without the high-pass filter process and the actual yaw rate without the high-pass filter process, has been established, the vehicle motion control means executes a vehicle motion control.

Advantageous Effects of Invention

The vehicle motion control system can reduce an influence of the sensor error (in particular, a zero point error included in a low frequency component) by executing the OS/US determinations based on the reference yaw rate after the high-pass filter process and the actual yaw rate after the high-pass filter process. With the operation, there is an advantage that the vehicle motion control is appropriately executed since an accuracy of the OS/US determinations is improved.

Brief Description of Drawings

FIG. 1 is a configuration diagram illustrating a vehicle motion control system according to an embodiment of the present invention.

FIG. 2 is a flowchart illustrating an operation of the vehicle motion control system described in FIG. 1.
FIG. 3 is an explanatory view illustrating a first modification of the vehicle motion control system described in FIG. 1.
FIG. 4 is an explanatory view illustrating a second modification of the vehicle motion control system described in FIG. 1.
FIG. 5 is a flowchart illustrating a third modification of the vehicle motion control system described in FIG. 1.
FIG. 6 is a flowchart illustrating a fourth modification of the vehicle motion control system described in FIG. 1.

Description of Embodiments

An embodiment of the present invention will be explained below in detail with reference to some drawings. Note that the present invention is by no means restricted by the embodiment. Further, the components of the embodiment include components which can be replaced while keeping identity of the present invention as well as the replacement of which is obvious. Further, plural modifications described in the embodiment can be optionally combined with each other within a range which is obvious to a person skilled in the art.

[Vehicle motion control system]

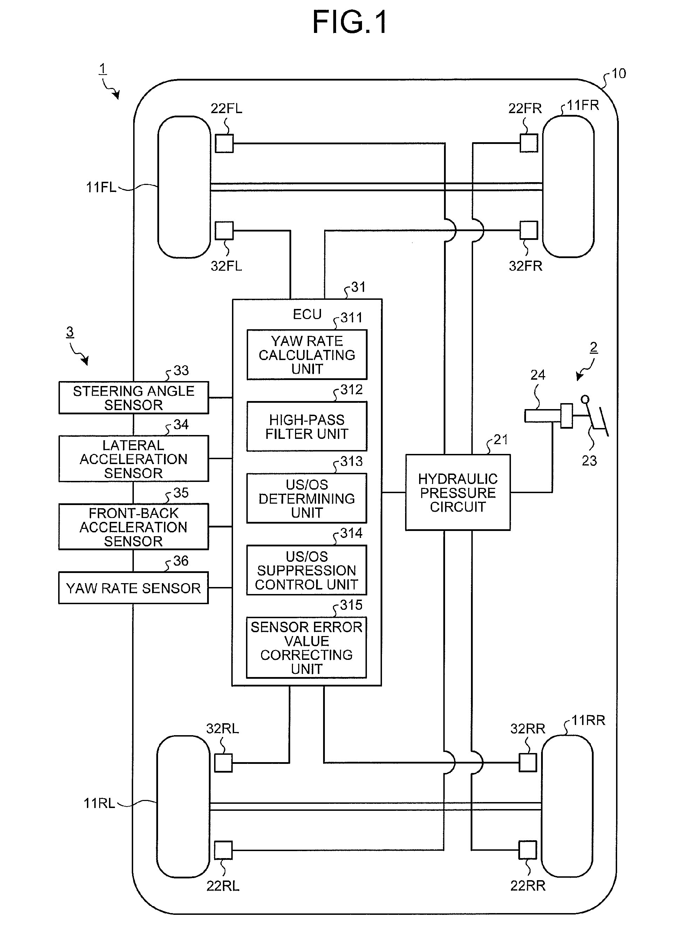

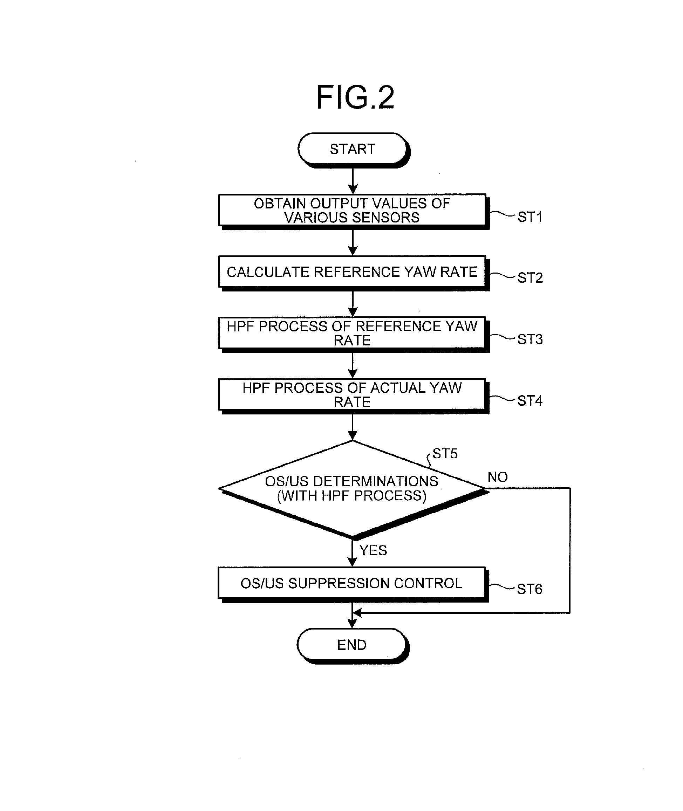

FIG. 1 is a configuration diagram illustrating a vehicle motion control system according to an embodiment of the present invention. FIG. 2 is a flowchart illustrating an operation of the vehicle motion control system described in FIG. 1.
A vehicle motion control system 1 is a system for controlling a motion or a behavior of a vehicle 10 (hereinafter, referred to as a vehicle motion control) which can realize, for example, a VSC (Vehicle Stability Control) function. The embodiment will explain, as an example, a case that when a determination whether the vehicle 10 is in an over-steered state or in an under-steered state (OS/US determination) is executed and the OS/US determinations are established, a control for suppressing the under-steered state and the over-steered state of the vehicle 10 (OS/US suppression controls) is executed.
The vehicle motion control system 1 includes a brake force control device 2 and a control unit 3 (refer to FIG. 1). Note that, in the embodiment, the vehicle 10 employs an FR (Front engine Rear drive) system, wherein a left rear wheel 11RL and a right rear wheel 11RR are used as wheels to be driven of the vehicle 10, and a left front wheel 11FL and a right front wheel 11FR are used as wheels to be steered of the vehicle 10.
The brake force control device 2 is a device for controlling a brake force to the respective wheels 11FR to 11RL and has a hydraulic pressure circuit 21, wheel cylinders 22FR to 22RL, a brake pedal 23, and a master cylinder 24. The hydraulic pressure circuit 21 is composed of a reservoir, an oil pump, a hydraulic pressure holding valve, a hydraulic pressure reducing valve, and the like (not illustrated). The brake force control device 2 applies a brake force to the wheels 11FR to 11RL as described below. That is, (1) at the time of an ordinary drive, when the brake pedal 23 is depressed by a driver, a depression amount of the brake pedal 23 is transmitted to the hydraulic pressure circuit 21 via the master cylinder 24. Thus, the hydraulic pressure circuit 21 adjusts a hydraulic pressure of the respective wheel cylinders 22FR to 22RL according to the depression amount of the brake pedal 23. With the operation, the respective wheel cylinders 22FR to 22RL are driven so that a brake force (brake pressure) is applied to the respective wheels 11FR to 11RL. Meanwhile, (2) at the time of a vehicle motion control, a target brake force to the respective wheels 11FR to 11RL is calculated based on a motion state of the vehicle 10, the hydraulic pressure circuit 21 is driven based on the target brake force, and the brake force of the respective wheel cylinders 22FR to 22RL is controlled.

The control unit 3 has an ECU (Electrical Control Unit) 31 and various sensors 32FL to 36. The ECU 31 has a yaw rate calculating unit 311 for calculating a reference yaw rate Yr_Std, a high-pass filter unit 312 for subjecting the reference yaw rate Yr_Std and an actual yaw rate Yr to a high-pass filter process, an OS/US determining unit 313 for determining the under-steered state and the over-steered state of the vehicle 10, an OS/US suppression control unit 314 for executing an under-steering suppression control and an over-steering suppression control, and a sensor error value correcting unit 315 for correcting a sensor error value. The various sensors 32 to 36 include, for example, wheel speed sensors 32FL to 32RL for detecting a wheel speed of the respective wheels 11FR to 11RL, a steering angle sensor (or steering wheel angle sensor) 33 for detecting a steering angle δ of the vehicle 10, a lateral acceleration sensor 34 for detecting a lateral acceleration Gy of the vehicle 10, a front-back acceleration sensor 35 for detecting a front-back acceleration Gx of the vehicle 10, and the yaw rate sensor 36 for detecting the actual yaw rate Yr of the vehicle 10, and the like. In the control unit 3, the ECU 31 controls the brake force control device 2 based on the output values of the various sensors 32FL to 36. With the operation, a predetermined vehicle motion control is executed.

[OS/US suppression controls]

In the ordinary vehicle motion control system, the reference yaw rate (target yaw rate) and the actual yaw rate are obtained based on output values of the various sensors, and the OS/US determinations are executed based on the reference yaw rate and the actual yaw rate. Then, when the OS/US determinations are established, the OS/US suppression controls are executed.

Here, the output values of the various sensors include an inherent sensor error (in particular, a zero point error included in a low frequency component). The sensor error is a known value which can be obtained from specifications of the various sensors. Further, although it is preferable that the sensor error is as small as possible, in general, a less expensive sensor has a larger sensor error. A large amount of the sensor error is not preferable because there is a possibility that the OS/US determinations are delayed when the number of times of steering is small. This is not preferable because, for example, in a determination of an under-steered state, an affirmative determination is not executed unless the actual yaw rate becomes sufficiently small and further, and in a determination of an over-steered state, an affirmative determination is not executed unless the actual yaw rate becomes sufficiently large.

Thus, in the vehicle motion control system 1, the following configuration is employed to suppress a delay of the OS/US determination due to a sensor error (refer to FIG. 2).

At step ST1, the output values of the various sensors 32FL to 36 are obtained. For example, in the embodiment, the ECU 31 obtains a wheel speed of the respective wheels 11FR to 11RL, a steering angle δ of the front wheels 11FR and 11FL, and the lateral acceleration Gy, the front-back acceleration Gx, and the actual yaw rate Yr of the vehicle 10 as the output values of the various sensors 32FL to 36. After step ST1, a process goes to step ST2.

At step ST2, the reference yaw rate Yr_Std is calculated based on the output values of the various sensors 32FL to 36. The reference yaw rate Yr_Std is a target vehicle state amount in the OS/US suppression control and is calculated based on a steering state and a vehicle speed of the vehicle 10. For example, in the embodiment, the ECU 31 (yaw rate calculating unit 311) calculates the reference yaw rate Yr_Std based on output values of the wheel speed sensors 32FL to 32RR, an output value of the steering angle sensor 33, and an output value of the lateral acceleration sensor 34 which are obtained at step ST1, as well as an expression (1) described below. Note that V shows the vehicle speed which is calculated from the wheel speed of the respective wheels 11FR to 11RL. Further, L is a wheel base, and Kh is a stability factor. After step ST2, the process goes to step ST3.

$$YrStd = \frac{V\delta}{L} - KhGyV$$

(1)

At step ST3, the reference yaw rate Yr_Std is subjected to the high-pass filter process (HPF). The high-pass filter process is a process for cutting off a signal equal to or less than a predetermined cut-off frequency. The cut-off frequency is set to a numerical value lower than a frequency (ordinarily, about 1 [Hz]) of a vehicle motion. For example, in the embodiment, the ECU 31 (high-pass filter unit 312) subjects the reference yaw rate Yr_Std calculated at step ST2 to a primary high-pass filter process. Further, the cut-off frequency is fixedly set 0.2 [Hz]. With the operation, an influence of a sensor error of the steering angle sensor 33 and the lateral acceleration sensor 34 on the reference yaw rate Yr_Std is reduced. After step ST3, the process goes to step ST4.

At step ST4, the actual yaw rate Yr is subjected to the high-pass filter process. For example, in the embodiment, the ECU 31 (high-pass filter unit 312) executes the primary high-pass filter process using the cut-off frequency set to 0.2 [Hz] based on an output value of the yaw rate sensor 36 obtained at step ST1. With the operation, an influence of a sensor error of the yaw rate sensor 36 on the actual yaw rate Yr is reduced. After step ST4, the process goes to step ST5.

At step ST5, the OS/US determinations are executed based on a deviation ErrYr between the reference yaw rate Yr_Std after the high-pass filter process and the actual yaw rate Yr after the high-pass filter process. For example, in the embodiment, the ECU 31 (the OS/US determining unit 313) executes the OS/US determination based on expressions (2) and (3) described below.

US determination establishment condition:

```
deviation ErrYr = (reference yaw rate Yr_Std after high-
pass filter process) - (actual yaw rate Yr after high-pass
filter process) > k                                    (2)
```

OS determination establishment condition: deviation

```
ErrYr = (reference yaw rate Yr_Std after high-pass filter
process) - (actual yaw rate Yr after high-pass filter
process) < -k                                          (3)
```

These expressions (2) and (3) show determination expressions when the vehicle turns left. In the OS/US determination when the vehicle turns right, although symbols of the actual yaw rate Yr, the lateral acceleration Gy, and the front wheel steering angle δ are opposite to those when the vehicle turns left, the OS/US determination can be executed likewise when the vehicle turns left. When the expression (2) is satisfied at the time of left turn of the vehicle, it is determined that the vehicle 10 is in the under-steered state (US determination). When the expression (3) is satisfied, it is determined that the vehicle 10 is in the over-steered state (OS determination).

Note that a threshold value k can be optionally selected in a range of 0 [deg] < |k| < (sensor error). At the time of the OS/US determination (at the time of start of the OS/US suppression control to be described later (step ST6)) can be adjusted by adjusting the threshold value k. For example, as the threshold value k is smaller, the OS/US determination establishment conditions are likely to establish. On the contrary, as the threshold value k is larger, the OS/US determination establishment conditions are not likely to establish. Accordingly, when the threshold value k is excessively small, the OS/US suppression control (step ST6) to be described later is executed at an early stage. Consequently, since uncomfortable feeling is given to a driver, the excessively small threshold value k is not preferable. On the contrary, when the threshold value k is excessively large, since the OS/US determinations are delayed and the start of the OS/US suppression controls are delayed, the excessively large threshold value k is not preferable. For example, in the embodiment, the threshold value k is set to k = 2.0 x (L/V) [deg] by converting an experimentally select value 2.0 to the front wheel steering angle.

At step ST5, when the OS/US determinations have been established (when any one of the US determination and OS determination has been established; affirmative determination), the process goes to step ST6. When the OS/US determinations have not been established (negative determination), the process is finished (returns to step ST1).

At step ST6, the OS/US suppression controls are executed. For example, in the embodiment, the ECU 31 (the OS/US suppression control unit 314) executes the OS/US suppression controls by driving the hydraulic pressure circuit 21 and controlling brake forces of the respective wheels 11FR to 11RL according to a result of determination at step ST5. Note that the OS/US suppression controls are not limited to the brake force controls of the wheels, and a known control, for example, a drive force distribution control to the drive wheels of the vehicle, an engine output control, and the like may be employed.

[First modification]

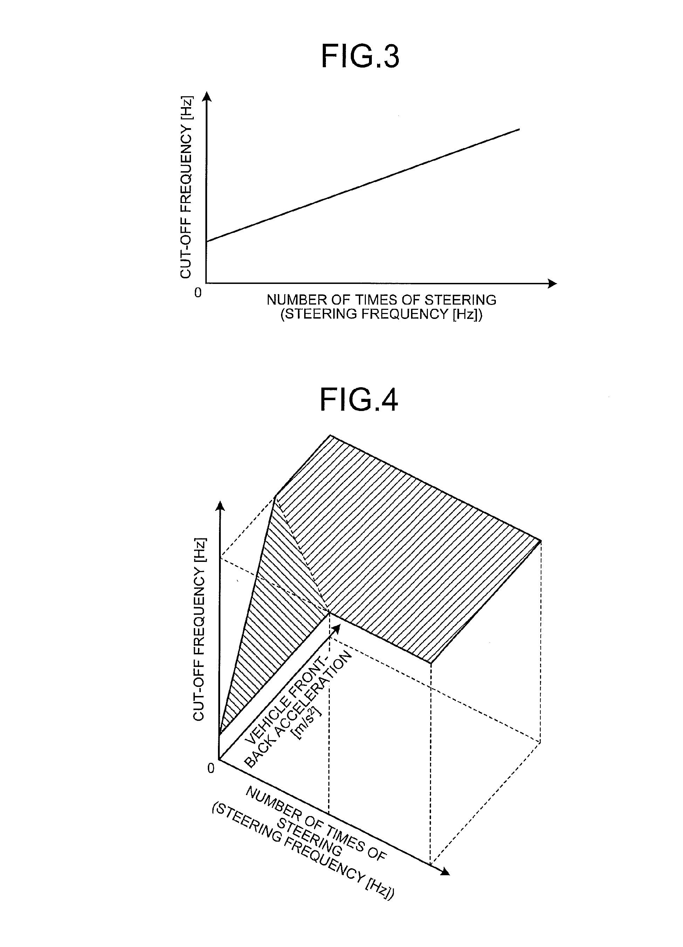

FIG. 3 is an explanatory view illustrating a first modification of the vehicle motion control system described in FIG. 1.

In the above-described embodiment, when the reference yaw rate Yr_Std is subjected to the high-pass filter process (step ST3), the fixed value is used as the cut-off frequency. However, the embodiment is not limited thereto, and the cut-off frequency may be changed according to the number of times of steering of the vehicle 10 (refer to FIG. 3). As the number of times of steering, for example, a steering frequency, a steering angle, a steering speed, steering acceleration, and the like are used.

For example, in the first modification, the steering frequency is used as the number of times of steering. Further, since the number of times of steering and the cut-off frequency are in a proportional relation, the number of times of steering is set so that the cut-off frequency becomes low when the steering frequency is low, and the cut-off frequency becomes high when the steering frequency is high (refer to FIG. 3). Further, in the high-pass filter process of the reference yaw rate Yr_Std (step ST3) and the high-pass filter process of the actual yaw rate Yr (step ST4), the ECU 31 (high-pass filter unit 312) calculates the number of times of steering (steering frequency) based on the output value of the steering angle sensor 33 obtained at step ST1. Based on the number of times of steering, the ECU 31 calculates the cut-off frequency from a map of FIG. 3. Then, the high-pass filter process of the reference yaw rate Yr_Std is executed using the cut-off frequency.

In the above configuration, since the cut-off frequency is changed according to the number of times of steering of the vehicle 10, an accuracy of the OS/US determinations (step ST5) is improved. For example, in an operating state such as a steering keeping state, the number of times of steering by the driver is small. Accordingly, when the cut-off frequency is high, the OS/US determinations (step ST5) are difficult. Accordingly, when the number of times of steering is small, appropriate OS/US determinations (step ST5) can be realized by setting the cut-off frequency low.

[Second modification]

FIG. 4 is an explanatory view illustrating a second modification of the vehicle motion control system described in FIG. 1.

When it is assumed that the vehicle 10 turning-travels in a grip state, the deviation ErrYr between the reference yaw rate Yr_Std and the actual yaw rate Yr is shown by an expression (4) described below. Here, $\delta 0$ shows a zero point error of the steering angle sensor 33, Gy0 shows a zero point error of the lateral acceleration sensor 34, and Yr0 shows a zero point error of the yaw rate sensor 36.

$$
\begin{aligned}
ErrYr &= YrStd - Yr \\
&= \left( \frac{V(\delta + \delta 0)}{L} - Kh(Gy + Gy0)V \right) - (Yr + Yr0) \\
&= \left( \frac{V(\delta + \delta 0)}{L} - Kh(Gy + Gy0)V \right) - \left( \frac{V\delta}{L} - KhGyV + Yr0 \right) \\
&= \frac{V\delta 0}{L} - KhGy0V - Yr0
\end{aligned}
\tag{4}
$$

When a product obtained by multiplying the deviation ErrYr by L/V is used as a converted value ErrStr of the front wheel steering angle, the converted value ErrStr is shown by an expression (5) described below.

$$
ErrStr = \delta 0 - KhGy0L - \frac{Yr0L}{V}
\tag{5}
$$

In the converted value ErrStr, a first term ($\delta 0$) and a second term (-KhGy0L) are fixed values and a third term (-Yr0L/V) is a variable value according to the vehicle speed V. Accordingly, when it is intended to execute the OS/US determinations using the threshold value k converted to the front wheel steering angle, the zero point error of the yaw rate sensor 36 is Yr0L/V. Accordingly, it can be found that when a change (an absolute value of the front-back acceleration Gx) of the vehicle speed V is high, an influence of a zero point error of a sensor is high. On the contrary, when the change of the vehicle speed V is low, the influence of the zero point error of the sensor is low.

Thus, in the embodiment, the cut-off frequency may be changed according to the front-back acceleration Gx of the vehicle 10. For example, the cut-off frequency may be calculated using a predetermined map for prescribing a relation between the front-back acceleration Gx and the cut-off frequency (not illustrated). With the operation, the accuracy of the OS/US determinations (step ST5) can be further improved. Note that, in the map, since the front-back acceleration Gx and the cut-off frequency are in a proportional relation, the cut-off frequency becomes low when the front-back acceleration Gx is low, whereas the cut-off frequency is high when the front-back acceleration Gx is high.

For example, in the second modification, a three-dimensional map (refer to FIG. 4), which prescribes a relation among the number of times of steering (steering frequency), the front-back acceleration Gx, and the cut-off frequency of the vehicle 10 is used, the cut-off frequency is calculated using the map, and the OS/US determinations (step ST5) are executed. Further, in the map of FIG. 4, in particular, the cut-off frequency is set low in a region where both the number of times of steering and the front-back acceleration Gx are low. As a result, the influence of the zero point error of the sensor is further reduced.

[Third modification]

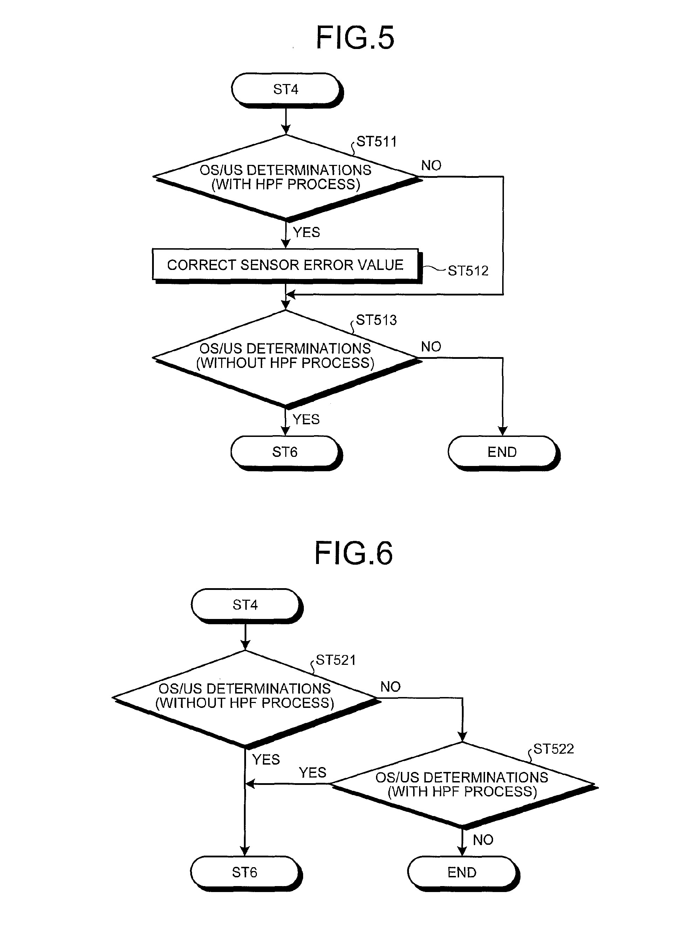

FIG. 5 is a flowchart illustrating a third modification of the vehicle motion control system described in FIG. 1. FIG. 5 illustrates a modification of the OS/US determinations (step ST5) described in FIG. 2.

In the embodiment, only the OS/US determinations (step ST5) based on the deviation ErrYr between the reference yaw rate Yr_Std after the high-pass filter process and the actual yaw rate Yr after the high-pass filter process are executed. When the OS/US determinations have been established, the OS/US suppression controls are executed (affirmative determination at step ST5 as well as step ST6) (refer to FIG. 2).

In contrast, in the third modification, the OS/US determinations without the high-pass filter process (step ST513) are further executed in addition to the OS/US determinations with the high-pass filter process (step ST511) (refer to FIG. 5). With the operation, reliability of the OS/US determinations is improved. For example, in the third modification, the OS/US determinations are executed as described below.

At step ST511, the OS/US determinations based on the deviation ErrYr between the reference yaw rate Yr_Std after the high-pass filter process and the actual yaw rate Yr after the high-pass filter process are executed. At step ST511, when the OS/US determinations have been established (affirmative determination), the process goes to step ST512. When the OS/US determinations have not been established (negative determination), the process goes to step ST513.

At step ST512, a threshold value k' corresponding to the sensor error is corrected. The threshold value k' is set within a range of 0 [deg] < |k'| < (sensor error). For example, in the third modification, the sensor error value correcting unit 315 of the ECU 31 corrects the threshold value k' used at step ST513 to k'= (sensor error)/2. After step ST512, the process goes to step ST513.

At step ST513, the OS/US determinations are executed by comparing the deviation ErrYr between the reference yaw rate Yr_Std and the actual yaw rate Yr with the predetermined threshold value k'. For example, in the third modification, the ECU 31 (OS/US determining unit 313) executes the OS/US determinations based on expressions (6) and (7) described below. The expressions (6) and (7) show determination expressions when the vehicle turns left.

Note that the threshold value k' is a threshold value corresponding to the sensor error. However, when the affirmative determination has been made at step ST511, the threshold value k' after amendment is used. At step ST513, when the OS/US determinations have been established (affirmative determination), the process goes to step ST6. When the OS/US determinations have not been established (negative determination), the process is finished (returns to step ST1).

US determination establishment condition:

```
deviation ErrYr = (reference yaw rate Yr_Std without high-
pass filter process) - (actual yaw rate Yr without high-
pass filter process) > k'                              (6)
```

OS determination establishment condition: deviation

$$\text{ErrYr} = \text{(reference yaw rate Yr\_Std without high-pass filter}$$
$$\text{process)} - \text{(actual yaw rate Yr without high-pass filter}$$
$$\text{process)} < -k' \tag{7}$$

[Fourth modification]

FIG. 6 is a flowchart illustrating a fourth modification of the vehicle motion control system described in FIG. 1. FIG. 6 illustrates a modification of the OS/US determinations (step ST5) described in FIG. 2.

In the fourth modification, when at least one of the OS/US determinations with the high-pass filter process (step ST522) and the OS/US determinations without the high-pass filter process (step ST521) has been established, the OS/US suppression controls (step ST6) are executed (affirmative determination at step ST522 or affirmative determination at step ST521) (refer to FIG. 6). With the operation, the reliability of the OS/US determinations can be improved. For example, in the fourth modification, the OS/US determinations are executed as described below.

At step ST521, the OS/US determinations based on the deviation ErrYr between the reference yaw rate Yr_Std and the actual yaw rate Yr are executed. For example, in the fourth modification, when the vehicle turns left, the ECU 31 (the OS/US determining unit 313) executes the OS/US determinations based on the expressions (6) and (7). However, in the fourth modification, the threshold value k' is set to a fixed value. At step ST521, when the OS/US determinations have been established (affirmative determination), the process goes to step ST6. When the OS/US determinations have not been established, (negative determination), the process goes to step ST522.

At step ST522, the OS/US determinations are executed based on the deviation ErrYr between the reference yaw rate Yr_Std after the high-pass filter process and the actual yaw rate Yr after the high-pass filter process. At step ST522, when the OS/US determinations have been established (affirmative determination), the process goes to step ST6. When the OS/US determinations have not been established (negative determination), the process is finished (returns to step ST1).

[Effects]

As described above, the vehicle motion control system 1 includes a vehicle state amount obtaining means (the various sensors 32FL to 36 and the yaw rate calculating unit 311 of the control unit 3) for obtaining the reference yaw rate Yr_Std and the actual yaw rate Yr of the vehicle 10, a vehicle state estimating means (the OS/US determining unit 313 of the control unit 31) for executing the OS/US determinations based on the reference yaw rate Yr_Std and the actual yaw rate Yr, and a vehicle motion control means (the OS/US suppression control unit 314 of the control unit 31) for executing a vehicle motion control based on a result of the OS/US determinations (refer to FIG. 1). Further, the vehicle state estimating means (the high-pass filter unit 312 of the control unit 31) executes the high-pass filter process for removing a component equal to or less than the predetermined cut-off frequency from the reference yaw rate Yr_Std and the actual yaw rate Yr (step ST3 and step ST4)(refer to FIG. 2). Then, the vehicle state estimating means (the OS/US determining unit 313 of control unit 31) executes the OS/US determinations based on the deviation between the reference yaw rate Yr_Std after the high-pass filter process and the actual yaw rate Yr after the high-pass filter process (for example, based on the expression (2) and the expression (3)) (step ST5).

In the above configuration, the influence of the sensor error (in particular, the zero point error included in the low frequency component) can be reduced by executing the OS/US determinations (step ST5) based on the reference yaw rate Yr_Std after the high-pass filter process and the actual yaw rate Yr after the high-pass filter process. With the operation, since the accuracy of the OS/US determinations is improved, there is an advantage that the vehicle motion control is appropriately executed. Further, in the configuration, since the less expensive sensor (sensor having a large sensor error) can be used, there is an advantage that a product cost can be reduced.

Further, in the vehicle motion control system 1, it is preferable to change the cut-off frequency used in the high-pass filter process (step ST3 and step ST4) according to the number of times of steering of the vehicle 10 (refer to FIG. 3). With the operation, since the high-pass filter process is executed using an appropriate cut-off frequency, there is an advantage that the accuracy of the OS/US determinations is further improved.

Further, in the vehicle motion control system 1, it is preferable to change the cut-off frequency used in the high-pass filter process (step ST3 and step ST4) according to the front-back acceleration Gx of the vehicle 10 (refer to FIG. 4). With the operation, since the high-pass filter process is executed using the appropriate cut-off frequency, there is an advantage that the accuracy of the OS/US determinations is further improved.

Further, in the vehicle motion control system 1, the vehicle state estimating means (the OS/US determining unit 313 of the ECU 31) determines whether or not the OS/US determinations are established by comparing: the deviation ErrYr between the reference yaw rate Yr_Std after the high-pass filter process and the actual yaw rate Yr after the high-pass filter process; with the predetermined threshold value k having an absolute value larger than 0 and smaller than a known sensor error (affirmative determination at step ST5) (refer to FIG. 2 and expressions (2) and (3)).

In the above configuration, since the threshold value k of the OS/US determinations is set smaller than the sensor error, there is an advantage that the delay of the OS/US determinations due to the sensor error is suppressed. In particular, the OS/US determinations using the threshold value k can be realized by subjecting the reference yaw rate Yr_Std and the actual yaw rate Yr to the high-pass filter process (step ST3 and step ST4).

Further, in the vehicle motion control system 1, when the OS/US determinations based on the deviation ErrYr between the reference yaw rate Yr_Std after the high-pass filter process and the actual yaw rate Yr after the high-pass filter process are established (affirmative determination at ST511), the vehicle state estimating means (the OS/US determining unit 313 of the ECU 31) sets the threshold value k' having an absolute value larger than 0 and smaller than the sensor error (step ST512). Then, the OS/US determinations are executed by comparing the deviation ErrYr between the reference yaw rate Yr_Std without the high-pass filter process and the actual yaw rate Yr without the high-pass filter process with the threshold value k' (step ST513) (refer to FIG. 5).

In the above configuration, since the OS/US determinations without the high-pass filter process (step ST513) are further executed in addition to the OS/US determinations with the high-pass filter process (step ST511), there is an advantage that the reliability of the OS/US determinations is improved. Further, in the OS/US determinations (step ST513) based on the deviation ErrYr between the reference yaw rate Yr_Std without the high-pass filter process and the actual yaw rate Yr without the high-pass filter process, since the threshold value k' smaller than the sensor error is used, there is an advantage that the delay of the OS/US determinations due to the sensor error is suppressed.

Further, in the vehicle motion control system 1, when at least one of the OS/US determinations (step ST522) based on the deviation ErrYr between the reference yaw rate Yr_Std after the high-pass filter process and the actual yaw rate Yr after the high-pass filter process, and the OS/US determinations (step ST521) based on the deviation ErrYr between the reference yaw rate Yr_Std without the high-pass filter process and the actual yaw rate Yr without the high-pass filter process has been established, the vehicle motion control means executes the vehicle motion control (step ST6) (affirmative determination at step ST522 or affirmative determination at step ST521) (refer to FIGS. 6 and 2).

In the above configuration, since the OS/US determinations without the high-pass filter process (step ST521) are further executed in addition to the OS/US determinations with the high-pass filter process (step ST522), there is an advantage that the reliability of the OS/US determinations is improved. In particular, even though the OS/US determinations without the high-pass filter process (step ST521) are not established, when the OS/US determinations with the high-pass filter process (step ST522) are established, the vehicle motion control (step ST6) is executed (negative determination at step ST521 and affirmative determination at step ST522). Therefore, there is an advantage that the delay of the OS/US determinations due to the sensor error is appropriately suppressed.

Industrial Applicability

As described above, the vehicle motion control system according to the present invention is useful in that the OS/US determinations can be accurately executed by reducing the influence of the sensor error.

Reference Signs List

| | |
|---|---|
| 1 | vehicle motion control system |
| 2 | brake force control device |
| 21 | hydraulic pressure circuit |
| 22FR to 22RL | wheel cylinder |
| 23 | brake pedal |
| 24 | master cylinder |
| 3 | control unit |
| 31 | ECU |
| 311 | yaw rate calculating unit |
| 312 | high-pass filter unit |
| 313 | OS/US determining unit |
| 314 | OS/US suppression control unit |
| 315 | sensor error value correcting unit |
| 32FR to 32RL | wheel speed sensor |
| 33 | steering angle sensor |

| 34 | lateral acceleration sensor |
| 35 | front-back acceleration sensor |
| 36 | yaw rate sensor |
| 10 | vehicle |
| 11FR to 11RL | wheel |

**Claims**

1. A vehicle motion control system comprising:

   a vehicle state amount obtaining means configured to obtain a reference yaw rate and an actual yaw rate of a vehicle;
   a vehicle state estimating means configured to determine an over-steered state or an under-steered state of the vehicle (hereinafter, referred to as OS/US determinations) based on the reference yaw rate and the actual yaw rate; and
   a vehicle motion control means configured to execute a vehicle motion control based on a result of the OS/US determinations, wherein
   the vehicle state estimating means executes a high-pass filter process for removing a component equal to or less than a predetermined cut-off frequency from the reference yaw rate and the actual yaw rate, as well as executes the OS/US determinations based on a deviation between the reference yaw rate after the high-pass filter process and the actual yaw rate after the high-pass filter process.

2. The vehicle motion control system according to claim 1, wherein
   the vehicle state estimating means changes the cut-off frequency according to the number of times of steering of the vehicle.

3. The vehicle motion control system according to claim 1 or 2, wherein
   the vehicle state estimating means changes the cut-off frequency according to front-back acceleration of the vehicle.

4. The vehicle motion control system according to any one of claims 1 to 3, wherein
   when the vehicle state amount obtaining means calculates the reference yaw rate based on output values of a predetermined sensor, the vehicle state estimating means executes the OS/US determinations by a comparison of a deviation between the reference yaw rate after the high-pass filter process and the actual yaw rate after the high-pass filter process with a predetermined threshold value k having an absolute value larger than 0 as well as smaller than a sensor error of the sensor.

5. The vehicle motion control system according to claim 4, wherein
   when the OS/US determinations based on the deviation between the reference yaw rate after the high-pass filter process and the actual yaw rate after the high-pass filter process have been established, the vehicle state estimating means sets a threshold value k' having an absolute value larger than 0 and smaller than the sensor error, as well as executes the OS/US determinations by a comparison of a deviation between the reference yaw rate without the high-pass filter process and the actual yaw rate without the high-pass filter process with a threshold value k'.

6. The vehicle motion control system according to claim 4, wherein
   when at least one of the OS/US determinations based on a deviation between the reference yaw rate after the high-pass filter process and the actual yaw rate after the high-pass filter process, and the OS/US determinations based on a deviation between the reference yaw rate without the high-pass filter process and the actual yaw rate without the high-pass filter process, has been established, the vehicle motion control means executes a vehicle motion control.

# FIG.1

ECU ⌐311

YAW RATE
CALCULATING
UNIT

⌐312

HIGH-PASS
FILTER UNIT

⌐313

US/OS
DETERMINING
UNIT

⌐314

US/OS
SUPPRESSION
CONTROL UNIT

⌐315

SENSOR ERROR
VALUE
CORRECTING
UNIT

STEERING ANGLE
SENSOR

LATERAL
ACCELERATION
SENSOR

FRONT-BACK
ACCELERATION
SENSOR

YAW RATE SENSOR

HYDRAULIC
PRESSURE
CIRCUIT

# FIG.2

```
                    ┌──────────────┐
                    │    START     │
                    └──────────────┘
                            │
                            ▼
        ┌─────────────────────────────────┐
        │  OBTAIN OUTPUT VALUES OF        │────ST1
        │      VARIOUS SENSORS            │
        └─────────────────────────────────┘
                            │
                            ▼
        ┌─────────────────────────────────┐
        │  CALCULATE REFERENCE YAW RATE   │────ST2
        └─────────────────────────────────┘
                            │
                            ▼
        ┌─────────────────────────────────┐
        │  HPF PROCESS OF REFERENCE YAW   │────ST3
        │            RATE                 │
        └─────────────────────────────────┘
                            │
                            ▼
        ┌─────────────────────────────────┐
        │   HPF PROCESS OF ACTUAL YAW     │────ST4
        │            RATE                 │
        └─────────────────────────────────┘
                            │
                            ▼
                         ╱ST5
        ╱─────────────────────────────────╲
       ╱   OS/US DETERMINATIONS            ╲      NO
       ╲   (WITH HPF PROCESS)              ╱──────────┐
        ╲─────────────────────────────────╱          │
                            │ YES                     │
                            ▼                         │
        ┌─────────────────────────────────┐          │
        │   OS/US SUPPRESSION CONTROL     │────ST6    │
        └─────────────────────────────────┘          │
                            │                         │
                            ▼◄────────────────────────┘
                    ┌──────────────┐
                    │     END      │
                    └──────────────┘
```

# FIG.3

CUT-OFF FREQUENCY [Hz]

0

NUMBER OF TIMES OF STEERING
(STEERING FREQUENCY [Hz])

# FIG.4

CUT-OFF FREQUENCY [Hz]

VEHICLE FRONT-
BACK ACCELERATION
[m/s²]

0

NUMBER OF TIMES OF
STEERING
(STEERING FREQUENCY [Hz])

13

# FIG.5

```
        ┌──────────┐
        │   ST4    │
        └──────────┘
             │
             ▼
          ╱───────────────────╲  ─ST511
        ╱   OS/US DETERMINATIONS  ╲      NO
        ╲   (WITH HPF PROCESS)    ╱ ──────────┐
          ╲───────────────────╱               │
             │ YES                             │
             ▼                                 │
   ┌─────────────────────────────┐            │
   │  CORRECT SENSOR ERROR VALUE │ ─ST512     │
   └─────────────────────────────┘            │
             │          ◄──────────────────────┘
             ▼
          ╱───────────────────╲  ─ST513
        ╱   OS/US DETERMINATIONS  ╲      NO
        ╲  (WITHOUT HPF PROCESS)  ╱ ──────────┐
          ╲───────────────────╱               │
             │ YES                             │
             ▼                                 ▼
        ┌──────────┐                    ┌──────────┐
        │   ST6    │                    │   END    │
        └──────────┘                    └──────────┘
```

# FIG.6

```
        ┌──────────┐
        │   ST4    │
        └──────────┘
             │
             ▼
          ╱───────────────────╲  ─ST521
        ╱   OS/US DETERMINATIONS  ╲      NO
        ╲  (WITHOUT HPF PROCESS)  ╱ ──────────┐
          ╲───────────────────╱               │
             │ YES                             ▼
             │              YES     ╱───────────────────╲  ─ST522
             │         ◄──────────╱  OS/US DETERMINATIONS  ╲
             │                    ╲   (WITH HPF PROCESS)    ╱
             │                      ╲───────────────────╱
             │                             │ NO
             ▼                             ▼
        ┌──────────┐                 ┌──────────┐
        │   ST6    │                 │   END    │
        └──────────┘                 └──────────┘
```

| | | International application No. |
|---|---|---|
| **INTERNATIONAL SEARCH REPORT** | | PCT/JP2010/067783 |

A. CLASSIFICATION OF SUBJECT MATTER
*B60W30/02*(2006.01)i, *B60T8/173*(2006.01)i, *B60T8/1755*(2006.01)i, *B60W10/18*
(2006.01)i

According to International Patent Classification (IPC) or to both national classification and IPC

B. FIELDS SEARCHED

Minimum documentation searched (classification system followed by classification symbols)
B60W30/02, B60T8/173, B60T8/1755, B60W10/18

Documentation searched other than minimum documentation to the extent that such documents are included in the fields searched
Jitsuyo Shinan Koho          1922–1996   Jitsuyo Shinan Toroku Koho   1996–2010
Kokai Jitsuyo Shinan Koho    1971–2010   Toroku Jitsuyo Shinan Koho   1994–2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2000-79872 A  (Toyota Motor Corp.),<br>21 March 2000 (21.03.2000),<br>paragraphs [0006], [0013]<br>(Family: none) | 1-3<br>4-6 |
| Y<br>A | JP 10-132849 A  (Data Tec Co., Ltd.),<br>22 May 1998 (22.05.1998),<br>paragraphs [0004], [0008]<br>(Family: none) | 1-3<br>4-6 |
| Y<br>A | JP 6-278635 A  (Aisin Seiki Co., Ltd., Toyota<br>Motor Corp.),<br>04 October 1994 (04.10.1994),<br>paragraph [0068]<br>(Family: none) | 1-3<br>4-6 |

☒ Further documents are listed in the continuation of Box C.       ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 December, 2010 (10.12.10) | Date of mailing of the international search report<br>21 December, 2010 (21.12.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/067783 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2000-292432 A  (Nissan Motor Co., Ltd.),<br>20 October 2000 (20.10.2000),<br>paragraphs [0008] to [0009]<br>(Family: none) | 1-3<br>4-6 |

Form PCT/ISA/210 (continuation of second sheet) (July 2009)

**EP 2 626 266 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08048256 B